# EUROPEAN PATENT APPLICATION

(11) **EP 3 319 328 A1**
(43) Date of publication of application: **09.05.2018**
(21) Application number: 17200370.9
(22) Date of filing: 07.11.2017
(51) Int. Cl.: H04N 21/4788

(54) **STREAMING SERVICE METHOD AND DEVICE**

(30) Priority: 07.11.2016 KR 20160147594
(71) Applicant: Samsung Electronics Co., Ltd., Gyeonggi-do 16677 (KR)
(72) Inventor: HYUN, Juho, 16677 Suwon-si, (KR)
(74) Representative: HGF Limited

(57) **Abstract**

A method and an electronic device for providing a streaming service are provided. The electronic device includes a communication interface, a display, and a processor electrically coupled to the communication interface and the display configured to control playing a first content on a streaming service, identify at least one external electronic device playing the first content on the streaming service, and provide a user interface for communication with a user of the at least one external electronic device.

## Description

### TECHNICAL FIELD

The present disclosure relates to a method and device for providing a streaming service.

### BACKGROUND

A streaming service allows subscribers of the streaming service to consume multimedia contents provided through a network in real time. A user of a streaming service-enabled electronic device can consume various types of multimedia contents without saving the corresponding files to a storage device of the electronic device.

The above information is presented as background information only to assist with an understanding of the present disclosure. No determination has been made, and no assertion is made, as to whether any of the above might be applicable as prior art with regard to the present disclosure.

### SUMMARY

Among many streaming services, a music streaming service is provided in a similar way to that of a radio broadcast service that is characterized by the broadcasting of randomly scheduled music contents. In this case, there is no need for a user to watch a display screen. This may lead to a breakdown of conversation or interaction with other users that are using the streaming service; thus, the user may lose an opportunity for social experiences that are available via the streaming service.

Aspects of the present disclosure are to address at least the above-mentioned problems and/or disadvantages and to provide at least the advantages described below. Accordingly, an aspect of the present disclosure is to provide an apparatus and method for playing content on a streaming service that allows the identification of other users who are playing the same content and allows communications between the users playing the same content.

In accordance with an aspect of the present disclosure, an electronic device is provided. The electronic device includes a communication interface, a display, and a processor electrically coupled to the communication interface and the display, and configured to control playing a first content on a streaming service, identify at least one external electronic device playing the first content on the streaming service, and provide a user interface for communicating with a user of the at least one external electronic device.

In accordance with another aspect of the present disclosure, a method of a streaming service on an electronic device is provided. The method includes playing a first content on a streaming service, identifying at least one external electronic device playing the first content on the streaming service, and providing a user interface for communication with a user of the at least one external electronic device.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a diagram illustrating a network environment including an electronic device according to an embodiment of the present disclosure;
FIG. 2 is a block diagram illustrating a configuration of an electronic device according to an embodiment of the present disclosure;
FIG. 3 is a block diagram illustrating a configuration of a program module according to an embodiment of the present disclosure;
FIG. 4 is a block diagram illustrating a configuration of a streaming service control module according to an embodiment of the present disclosure;
FIGS. 5A and 5B are diagrams for explaining a content-based inter-user conversation method in a streaming service according to various embodiments of the present disclosure;
FIGS. 6A and 6B are diagrams for explaining a method for determining a content to be played next through a content-based conversation in a streaming service according to various embodiments of the present disclosure;
FIG. 7 is a flowchart illustrating a content-based inter-user conversation/interaction method on a streaming service according to an embodiment of the present disclosure; and
FIG. 8 is a flowchart illustrating a method for determining a next content to be played on a streaming service with a user join function according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure.In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

An expression "comprising" or "may comprise" used in the present disclosure indicates presence of a corresponding function, operation, or element and does not limit an additional at least one function, operation, or element. The term "comprise" or "have" used herein indicates presence of a characteristic, numeral, operation, element, component, or combination thereof described in the Specification and does not exclude presence or addition of at least one other characteristic, numeral, operation, element, component, or combination thereof.

In the present disclosure, the term "or" includes any combination or the entire combination of together listed words. For example, "A or B" may include A, B, or A and B.

Expressions such as "a first" and "a second" in the present disclosure may represent various elements of the present disclosure, but do not limit corresponding elements, e.g., do not limit order and/or importance of corresponding elements, but may be used for distinguishing one element from another element. For example, both a first user device and a second user device are user devices and represent different user devices. For example, a first constituent element may be referred to as a second constituent element without deviating from the scope of the present disclosure, and similarly, a second constituent element may be referred to as a first constituent element.

When it is described that a first element is "coupled" to another element, such as a second element, the first element may be "directly coupled" to the second element or "electrically coupled" to the second element through a third element. However, when it is described that a first element is "directly coupled" to a second element, no third element may exist between the first and second elements.

Terms used in the present disclosure are not intended to limit the present disclosure but to illustrate various embodiments of the present disclosure. When using in a description of the present disclosure and the appended claims, a singular form includes a plurality of forms unless it is explicitly differently represented.

Unless differently defined, terms including a technical term and a scientific term used herein have the same meaning as may be generally understood by a person of common skill in the art. It should be understood that generally using terms defined in a dictionary have a meaning corresponding to that of a context of related technology and are not understood to have an ideal or excessively formal meaning unless explicitly defined.

In this disclosure, an electronic device may have a communication function. For example, an electronic device may be a smart phone, a tablet personal computer (PC), a mobile phone, a video phone, an e-book reader, a desktop PC, a laptop PC, a netbook computer, a personal digital assistant (PDA), a portable multimedia player (PMP), a moving picture experts group phase 1 or phase 2 (MPEG-1 or MPEG-2) audio layer3 (MP3) player, a portable medical device, a digital camera, or a wearable device, such as a head-mounted device (HMD) in the form of electronic glasses, electronic clothes, an electronic bracelet, an electronic necklace, an electronic appcessory, or a smart watch.

According to some embodiments, an electronic device may be a smart home appliance that involves a communication function, such as a television (TV), a digital versatile disc (DVD) player, audio equipment, a refrigerator, an air conditioner, a vacuum cleaner, an oven, a microwave, a washing machine, an air cleaner, a set-top box, a TV box, such as Samsung HomeSync™, Apple TV™, and Google TV™, a game console, an electronic dictionary, an electronic key, a camcorder, or an electronic picture frame.

According to some embodiments, an electronic device may be a medical device, such as magnetic resonance angiography (MRA), magnetic resonance imaging (MRI), computed tomography (CT), and ultrasonography, a navigation device, a global positioning system (GPS) receiver, an event data recorder (EDR), a flight data recorder (FDR), a car infotainment device, electronic equipment for ship, such as a marine navigation system or a gyrocompass), avionics, security equipment, or an industrial or home robot.

According to some embodiments, an electronic device may be furniture or part of a building or construction having a communication function, an electronic board, an electronic signature receiving device, a projector, or various measuring instruments, such as a water, electric, gas, or wave meter. An electronic device disclosed herein may be one of the above-mentioned devices or any combination thereof. As well understood by those skilled in the art, the above-mentioned electronic devices are not to be considered as a limitation of the present disclosure.

According to various embodiments, the electronic device may control the activation of a second sensor, based on a signal received through a first sensor, which reduces power consumption of the electronic device compared to a device of the related art, in which the second sensor is always activated. The electronic device according to various embodiments of the present disclosure may perform a predefined function in response to the signal received through the second sensor.

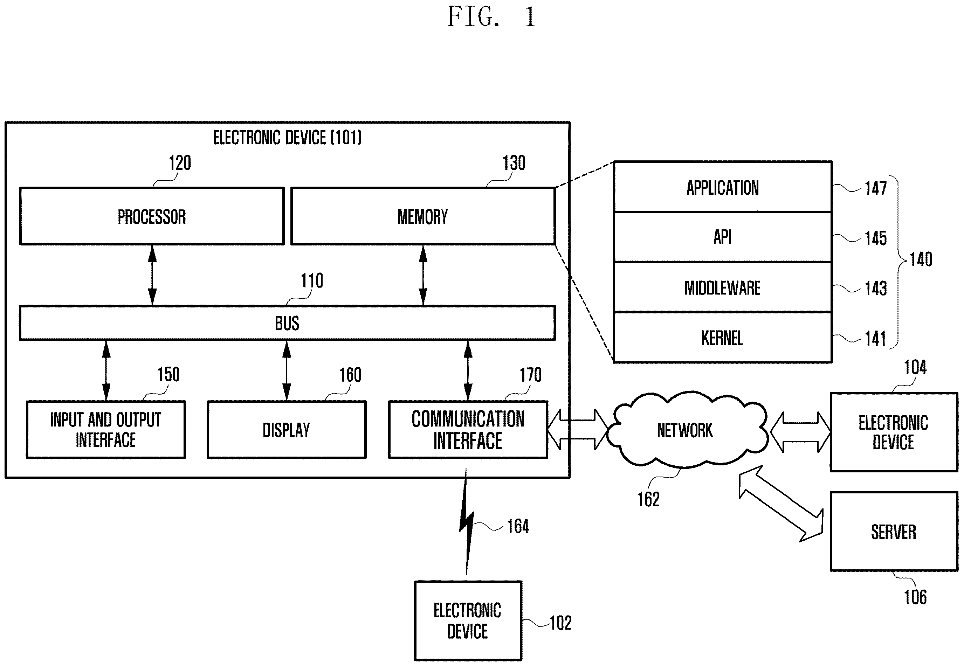

FIG. 1 is a block diagram illustrating an electronic apparatus according to an embodiment of the present disclosure.

Referring to FIG. 1, the electronic device 101 may include a bus 110, a processor 120, a memory 130, a user input module (i.e., input/output interface) 150, a display 160, and a communication interface 170.

The bus 110 may be a circuit for interconnecting elements of the electronic device 101 and for allowing a communication, such as by transferring a control message, between the elements.

The processor 120 can receive commands from the memory 130, the user input module 150, the display 160, and the communication interface 170, through the bus 110, can decipher the received commands, and perform operations and/or data processing according to the deciphered commands.

The memory 130 can store commands received from the processor 120 and/or other elements, and/or commands and/or data generated by the processor 120 and/or other elements. The memory 130 may include software and/or programs 140, such as a kernel 141, middleware 143, an application programming interface (API) 145, and an application 147. Each of the programming modules described above may be configured by software, firmware, hardware, and/or combinations of at least two thereof.

The kernel 141 can control and/or manage system resources used for execution of operations and/or functions implemented in other programming modules, such as the middleware 143, the API 145, and/or the applications 147, and can provide an interface through which the middleware 143, the API 145, and/or the applications 147 can access and then control and/or manage an individual element of the electronic device 101.

The middleware 143 can perform a relay function which allows the API 145 and/or the applications 147 to communicate with and exchange data with the kernel 141. In relation to operation requests received from at least one of applications 147, the middleware 143 can perform load balancing in relation to the operation requests by giving a priority in using a system resource, e.g. the bus 110, the processor 120, and/or the memory 130, of the electronic device 101 to at least one application from among the at least one of the applications 147.

The API 145 is an interface through which the applications 147 can control a function provided by the kernel 141 and/or the middleware 143, and may include at least one interface or function for file control, window control, image processing, and/or character control.

The user input module 150 can receive a command and/or data from a user, and transfer the received command and/or data to the processor 120 and/or the memory 130 through the bus 110. The display 160 can display an image, a video, and/or data to a user.

The communication interface 170 can establish a communication between the electronic device 101 and other electronic devices 102 and 104 and/or a server 106, and can support short range communication protocols, e.g. a WiFi protocol, a Bluetooth (BT) protocol, and a near field communication (NFC) protocol, communication networks, e.g. Internet, local area network (LAN), wide area network (WAN), a telecommunication network, a cellular network, a satellite network, a plain old telephone service (POTS), or any other similar and/or suitable communication networks, such as networks 162 or 164. Each of the other electronic devices 102 and 104 may be the same type or different types of electronic devices.

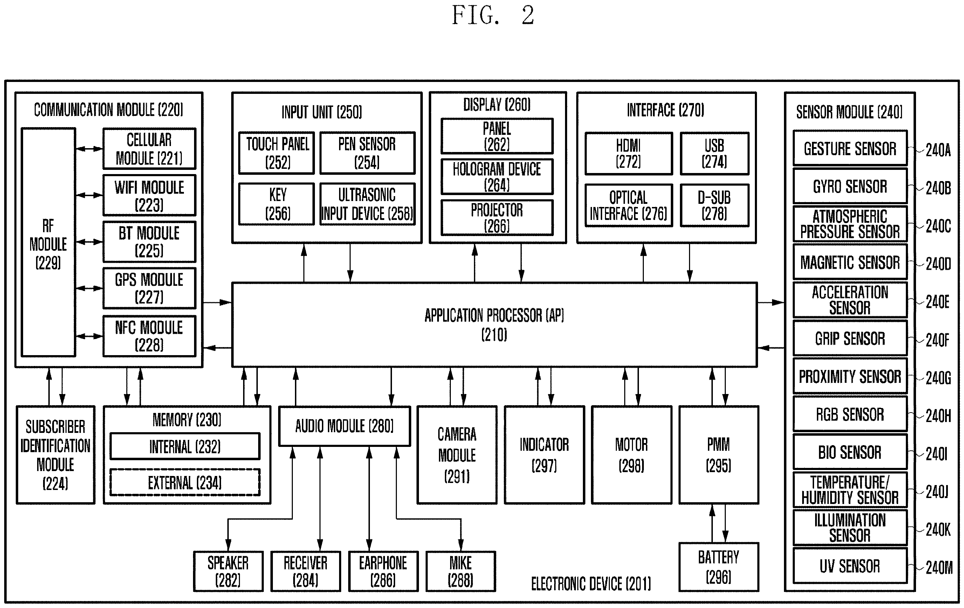

FIG. 2 illustrates an electronic device according to an embodiment of the present disclosure. The electronic device may form all or part of the electronic device 101 shown in FIG. 1.

Referring to FIG. 2, an electronic device 201 may include at least one application processor (AP) 210, a communication module 220, a subscriber identification module (SIM) card 224, a memory 230, a sensor module 240, an input unit 250, a display 260, an interface 270, an audio module 280, a camera module 291, a power management module 295, a battery 296, an indicator 297, and a motor 298.

The AP 210 may drive an operating system (OS) or applications, control a plurality of hardware or software components connected thereto, and also perform processing and operation for various data including multimedia data. The AP 210 may be formed of a system-on-chip (SoC), and may further include a graphic processing unit (GPU).

The communication module 220 may perform a data communication with any other electronic device connected to the electronic device 201 through the network. According to an embodiment, the communication module 220 may include therein a cellular module 221, a WiFi module 223, a BT module 225, a GPS module 227, an NFC module 228, and a radio frequency (RF) module 229.

The cellular module 221 may offer a voice call, a video call, a message service, or an Internet service through a communication network, such as long term evolution (LTE), LTE-advanced (LTE-A), code division multiple access (CDMA), wideband CDMA (WCDMA), universal mobile telecommunications system (UMTS), wireless broadband (WiBro), or global system for mobile communication (GSM). Additionally, the cellular module 221 may perform identification and authentication of the electronic device in the communication network, using the SIM card 224. According to an embodiment, the cellular module 221 may perform at least part of functions the AP 210 can provide, such as a multimedia control function.

According to an embodiment, the cellular module 221 may include a communication processor (CP), and may be formed of an SoC, for example. Although some elements such as the cellular module 221, such as the CP, the memory 230, or the power management module 295 are shown as separate elements being different from the AP 210 in FIG. 2, the AP 210 may be formed to have at least part of the above elements in an embodiment of the present disclosure.

According to an embodiment, the AP 210 or the cellular module 221 may load commands or data, received from a nonvolatile memory connected thereto or from at least one of the other elements, into a volatile memory to process them. Additionally, the AP 210 or the cellular module 221 may store data, received from or created at one or more of the other elements, in the nonvolatile memory.

Each of the WiFi module 223, the BT module 225, the GPS module 227 and the NFC module 228 may include a processor for processing data transmitted or received therethrough. Although FIG. 2 illustrates the cellular module 221, the WiFi module 223, the BT module 225, the GPS module 227 and the NFC module 228 as different blocks, at least two of these modules may be contained in a single integrated circuit (IC) chip or a single IC package, i.e., may be formed as a single SoC.

The RF module 229 may transmit and receive RF signals or any other electric signals, and may include a transceiver, a power amp module (PAM), a frequency filter, or a low noise amplifier (LNA). The RF module 229 may further include any component, e.g., a wire or a conductor, for transmission of electromagnetic waves in a free air space. Although FIG. 2 illustrates that the cellular module 221, the WiFi module 223, the BT module 225, the GPS module 227 and the NFC module 228 share the RF module 229, at least one of these modules may perform transmission and reception of RF signals through a separate RF module in an embodiment of the present disclosure.

The SIM card 224 may be a specific card formed of SIM and may be inserted into a slot formed at a certain location of the electronic device. The SIM card 224 may contain therein an integrated circuit card identifier (ICCID) or an international mobile subscriber identity (IMSI).

The memory 230 may include an internal memory 232 and an external memory 234. The internal memory 232 may include at least one of a volatile memory, such as dynamic random access memory (DRAM), static RAM (SRAM), synchronous DRAM (SDRAM), or a nonvolatile memory, such as one time programmable read-only memory (OTPROM), programmable ROM (PROM), erasable and programmable ROM (EPROM), electrically erasable and programmable ROM (EEPROM), mask ROM, flash ROM, NAND flash memory, and NOR flash memory.

According to an embodiment, the internal memory 232 may have the form of a solid state drive (SSD). The external memory 234 may include a flash drive, e.g., compact flash (CF), secure digital (SD), micro-SD, mini-SD, extreme digital (xD), or memory stick, and may be functionally connected to the electronic device 201 through various interfaces. The electronic device 201 may further include a storage device or medium such as a hard drive.

The sensor module 240 may measure physical quantity or sense an operating status of the electronic device 201, and then convert measured or sensed information into electric signals. The sensor module 240 may include at least one of a gesture sensor 240A, a gyro sensor 240B, an atmospheric pressure sensor 240C, a magnetic sensor 240D, an acceleration sensor 240E, a grip sensor 240F, a proximity sensor 240G, a color sensor 240H, such as an RGB (red, green, blue) sensor, a biometric sensor 240I, a temperature-humidity sensor 240J, an illumination sensor 240K, and a ultraviolet (UV) sensor 240M. Additionally or alternatively, the sensor module 240 may include an E-nose sensor, an electromyography (EMG) sensor, an electroencephalogram (EEG) sensor, an electrocardiogram (ECG) sensor, an infrared (IR) sensor, an iris scan sensor, or a finger scan sensor. The sensor module 240 may include a control circuit for controlling one or more sensors equipped therein.

The input unit 250 may include a touch panel 252, a digital pen sensor 254, a key 256, or an ultrasonic input device 258. The touch panel 252 may recognize a touch input in a capacitive, resistive, infrared, or ultrasonic type manner. The touch panel 252 may further include a control circuit. In case of a capacitive type, a physical contact or proximity may be recognized. The touch panel 252 may further include a tactile layer that offers a tactile feedback to a user.

The digital pen sensor 254 may be formed in the same or similar manner as receiving a touch input or by using a separate recognition sheet. The key 256 may include a physical button, an optical key, or a keypad. The ultrasonic input device 258 is capable of identifying data by sensing sound waves with a microphone (MIC) 288 in the electronic device 201 through an input tool that generates ultrasonic signals, thus allowing wireless recognition. According to an embodiment, the electronic device 201 may receive a user input from any external device connected thereto through the communication module 220.

The display 260 may include a panel 262, a hologram device 264, or a projector 266. The panel 262 may be liquid crystal display (LCD), or active matrix organic light emitting diode (AM-OLED)may have a flexible, transparent or wearable form, and may be formed of a single module with the touch panel 252. The hologram device 264 may project a stereoscopic image in the air using interference of light. The projector 266 may project an image onto a screen, which may be located at the inside or outside of the electronic device 201. According to an embodiment, the display 260 may further include a control circuit for controlling the panel 262, the hologram device 264, and the projector 266.

The interface 270 may include a high-definition multimedia interface (HDMI) 272, a universal serial bus (USB) 274, an optical interface 276, and a D-sub (d-subminiature) 278, and may be contained in the communication interface 170 shown in FIG. 1. Additionally or alternatively, the interface 270 may include a mobile high-definition link (MHL) interface, an SD card/multi-media card (MMC) interface, or an IR data association (IrDA) interface.

The audio module 280 may perform a conversion between sounds and electric signals. At least part of the audio module 280 may be contained in the input/output interface 150 shown in FIG. 1. The audio module 280 may process sound information inputted or outputted through a speaker 282, a receiver 284, an earphone 286, or the MIC 288.

The camera module 291 is capable of obtaining still images and moving images, and may include at least one image sensor, such as a front sensor or a rear sensor, a lens, an image signal processor (ISP), or a flash, such as LED or xenon lamp.

The power management module 295 may manage electric power of the electronic device 201 and may include a power management integrated circuit (PMIC), a charger IC, or a battery gauge.

The PMIC may be formed of an IC chip or SoC. Charging may be performed in a wired or wireless manner. The charger IC may charge a battery 296 and prevent overvoltage or overcurrent from a charger. According to an embodiment, the charger IC may have a charger IC used for at least one of wired and wireless charging types. A wireless charging type may include a magnetic resonance type, a magnetic induction type, or an electromagnetic type. Any additional circuit for a wireless charging may be further used, such as a coil loop, a resonance circuit, or a rectifier.

The battery gauge may measure the residual amount of the battery 296 and a voltage, current or temperature in a charging process. The battery 296 may store or create electric power therein and supply electric power to the electronic device 201. The battery 296 may be a rechargeable or solar battery.

The indicator 297 may illustrate thereon a current status, such as a booting, message, or recharging status of part or all of the electronic device 201. The motor 298 may convert an electric signal into a mechanical vibration. The electronic device 201 may include a specific processor, such as GPU, for supporting a mobile TV. This processor may process media data that comply with standards of digital multimedia broadcasting (DMB), digital video broadcasting (DVB), or media flow.

Each of the above-discussed elements of the electronic device disclosed herein may be formed of one or more components, and may have various names according to the type of the electronic device. The electronic device disclosed herein may be formed of at least one of the above-discussed elements without some elements or with additional elements. Some of the elements may be integrated into a single entity that still performs the same functions as those of such elements before integrated.

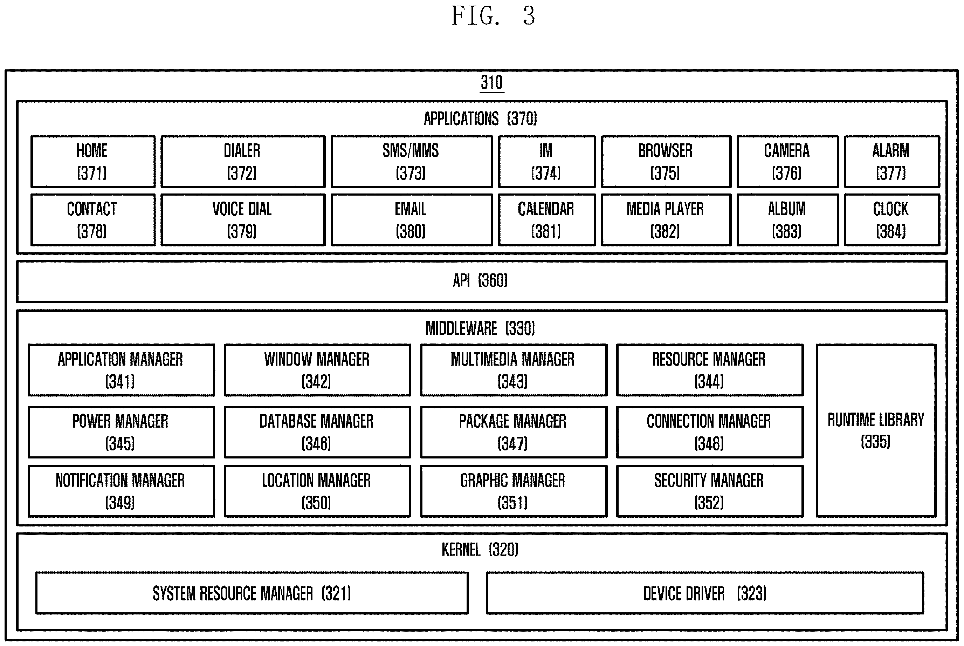

FIG. 3 illustrates a configuration of a programming module according to an embodiment of the present disclosure.

Referring to FIG. 3, a programming module 310 may be stored in the electronic device 101 or may be stored in the electronic device 201 illustrated in FIG. 2. At least a part of the programming module 310 may be implemented in software, firmware, hardware, or a combination of two or more thereof. The programming module 310 may be implemented in hardware, and may include an OS controlling resources related to an electronic device and/or various applications 370 executed in the OS. For example, the OS may be Android™, iOS™, Windows™, Symbian™, Tizen™, or Bada™.

Referring to FIG. 3, the programming module 310 may include a kernel 320, middleware 330, an API 360, and/or applications 370.

The kernel 320 may include a system resource manager 321 and/or a device driver 323. The system resource manager 321 may include a process manager, a memory manager, and a file system manager. The system resource manager 321 may perform the control, allocation, or recovery of system resources. The device driver 323 may include a display driver, a camera driver, a BT driver, a shared memory driver, a USB driver, a keypad driver, a Wi-Fi driver, and/or an audio driver, and may further include an inter-process communication (IPC) driver.

The middleware 330 may include multiple modules previously implemented so as to provide a function used in common by the applications 370, and may provide a function to the applications 370 through the API 360 in order to enable the applications 370 to efficiently use limited system resources within the electronic device. For example, the middleware 330 may include at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, a security manager 352, and any other suitable and/or similar manager.

The runtime library 335 may include a library module used by a complier, in order to add a new function by using a programming language during the execution of the applications 370, and may perform functions which are related to input and output, the management of a memory, or an arithmetic function.

The application manager 341 may manage a life cycle of at least one of the applications 370. The window manager 342 may manage GUI resources used on the screen. The multimedia manager 343 may detect a format used to reproduce various media files and may encode or decode a media file through a codec appropriate for the relevant format. The resource manager 344 may manage resources, such as a source code, a memory, or a storage space, of at least one of the applications 370.

The power manager 345 may operate together with a basic input/output system (BIOS), may manage a battery or power, and may provide power information used for an operation. The database manager 346 may manage a database in such a manner as to enable the generation, search and/or change of the database to be used by at least one of the applications 370. The package manager 347 may manage the installation and/or update of an application distributed in the form of a package file.

The connectivity manager 348 may manage a wireless connectivity such as Wi-Fi and BT. The notification manager 349 may display or report, to the user, an event such as an arrival message, an appointment, or a proximity alarm, in such a manner as not to disturb the user. The location manager 350 may manage location information of the electronic device. The graphics manager 351 may manage graphic effects, which are to be provided to the user, and/or a user interface related to the graphic effects. The security manager 352 may provide various security functions used for system security and user authentication. According to an embodiment of the present disclosure, when the electronic device has a telephone function, the middleware 330 may further include a telephony manager for managing a voice and/or video telephony call function of the electronic device.

The middleware 330 may generate and use a new middleware module through various functional combinations of the above-described internal element modules, may provide modules specialized according to types of OSs in order to provide differentiated functions, and may dynamically delete some of the existing elements, or may add new elements. Accordingly, the middleware 330 may omit some of the elements described in the various embodiments of the present disclosure, may further include other elements, or may replace the some of the elements with elements, each of which performing a similar function and having a different name.

The API 360 is a set of API programming functions, and may be provided with a different configuration according to an OS. In the case of Android or iOS, for example, one API set may be provided to each platform. In the case of Tizen, two or more API sets may be provided to each platform.

The applications 370 may include a preloaded application and/or a third party application, and may include a home 371, dialer 372, a short message service (SMS)/multimedia messaging service (MMS) 373, instant message (IM) 374, browser 375, camera 376, alarm 377, contact 378, voice dial 379, electronic mail (e-mail) 380, calendar 381, media player 382, album 383, and clock application 384, and any other suitable and/or similar application.

At least a part of the programming module 310 may be implemented by instructions stored in a non-transitory computer-readable storage medium. When the instructions are executed by one or more processors, the one or more processors may perform functions corresponding to the instructions. The non-transitory computer-readable storage medium may be the memory 220. At least a part of the programming module 310 may be executed by the one or more processors 210, and may include a module, a program, a routine, a set of instructions, and/or a process for performing one or more functions.

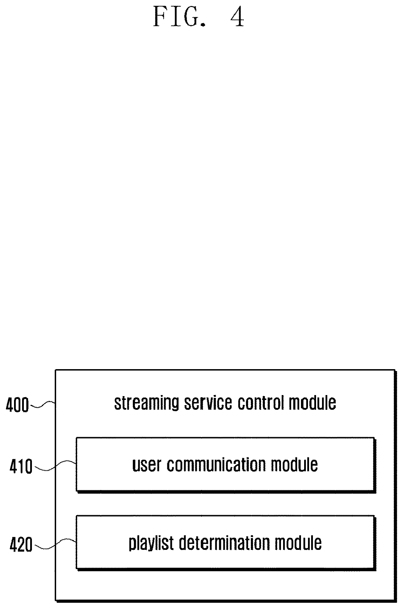

FIG. 4 is a block diagram illustrating a configuration of a streaming service control module according to an embodiment of the present disclosure.

Referring to FIG. 4, the electronic device 101 may include a streaming service control module 400 configured. The electronic device 101 may receive streaming of at least one content from an external server by means of the streaming service control module 400 to play back the corresponding content in real time. The streaming service control module 400 may include a user communication module 410 and a playlist determination module 420 and may provide a user interface for executing the streaming service.

Typically, such a streaming service is provided free of charge in exchange for viewing advertisements or banners with skip restrictions; and, similar to the legacy radio broadcasting, a streaming server provides scheduled contents. Of course, it may be possible for a user to designate a specific category such as station, genre, and artist to filter the contents to be consumed, the contents being provided randomly in the category. In order to remove restrictions on the degree of freedom of the user, the user may purchase contents; typically, the purchased contents are managed per user account.

According to various embodiments, the electronic device 101 may allow a user to make a communication (e.g. conversation, profile check, and join) with other users joined in a streaming service by means of the user communication module 410. According to various embodiments, the electronic device 101 may make it possible for the user to communicate with other users consuming the same content on a streaming service. The contents may be individual items (e.g., songs and videos) that can be categorized by station (or channel), genre (e.g., pop-song, K-pop, jazz, and rock), artist, or the like.

According to various embodiments, the electronic device 101 may provide a user interface that makes it possible for the users consuming the same content on the streaming service to communicate with each other using texts, images, and links by means of the user communication module 410. For example, in the case where a first and a second user are consuming the same content simultaneously on the streaming service, it may be possible for the first and second users to communicate with each other. In this case, the electronic device 101 may use the content as a real-time communication channel through which a user communicates with other users during the playback of the corresponding content.

According to various embodiments, the electronic device 101 may use a predetermined condition to filter second users for communication with a first user by means of the user communication module 410. For example, the electronic device 101 may filter the second users as counterparties by gender, age, nationality, race, hobby, religion, or a combination thereof. In this way, the electronic device 101 may filter out any second users even though they are simultaneously consuming the same content on the streaming service. Among the second users, the electronic device 101 may also filter in only those second users that match the preference of a first user consuming the same content at the same time point during the same streaming service.

According to various embodiments, the electronic device 101 may provide a user interface that makes it possible for users consuming the same content on the streaming service to check each other's profiles by means of the user communication module 410. For example, in the case where a first and a second user are simultaneously consuming the same content on the streaming service, the electronic device 101 may control such that the first and second users may check each other's profiles.

According to various embodiments, the electronic device 101 may receive user input for selecting the profile of a second user from a first user and present information on the second user in response to the user input. For example, the electronic device 101 may present information such as the content purchase channel of the second user (e.g., selection by content, selection by station, selection by genre, selection by artist, and selection by other category), similarity of the contents consumed by the first and second users, and the number of encounters between the first and second users in consuming the same contents.

According to various embodiments, the electronic device 101 may provide a user interface that makes it possible, by means of the user communication module 410, for the user to join in a group of users consuming the same contents in a streaming service. For example, in the case where a first and a second user are consuming the same content simultaneously on the streaming service, the electronic device 101 may receive a user input of the first user for requesting to join in communication with the second user, the user input being made by the first user. In this case, the first user may begin a conversation with the second user or check the profile of the second user to determine whether they have the same taste and whether to join in communication with the second user. After joining in communication, the electronic device 101 may control the streaming service such that the first user continues communication with the second user and may determine a playlist of the first user. The playlist determination operation will be clarified in the later description of the playlist determination module 420.

According to various embodiments, the electronic device 101 may determine the next content to be played by means of the playlist determination module 420. The playlist may be a list of the content items to be played on the streaming service. For example, if a user of the electronic device 101 is a free user, the electronic device 101 may receive a playlist generated randomly based on the category (e.g., station, genre, and artist) selected by the user from a server providing the streaming service. Alternatively, if there are contents purchased by the user, the electronic device 101 may save the pay contents in a playlist.

According to various embodiments, the electronic device 101 may determine the next content to be played based on whether a user has joined in communication with other users. For example, the electronic device 101 may receive a user input request for joining in communication with a second user of another electronic device, the user input request being made by the user of the electronic device 101, and notify the electronic device 101's user of joining in communication with the second user. After joining in communication, the electronic device 101 may generate a playlist for the first user based on the playlist of the second user.

According to various embodiments, the electronic device 101 may couple the playlists of the first and second users. For example, the electronic device 101 may check transitioning from a first content to a second content and, in this case, control to start playing the second content even though the first content is not completely consumed by the first user. In this way, the electronic device 101 may control the streaming service such that the first and second users communicate (converse) with each other about the second content.

According to various embodiments, the electronic device 101 may check whether there is any pay content purchased by the second user in the playlist of the second user. For example, if there is any content that cannot be consumed for free on the streaming service, the electronic device 101 may present a screen prompting the first user to purchase the corresponding content. According to various embodiments, if the user of the electronic device 101 rejects purchasing a pay content, the electronic device 101 may present other options to the electronic device's user. For example, the electronic device 101 may present to the user a first option of playing the contents available for the first user in the playlist of the second user, a second option of selectively playing the contents available for the first user in the playlist of the second user, a third option of playing the contents including those in the preexisting playlist of the first user, and a fourth option of playing the contents included in the preexisting playlist of the first user and, if the next content of the second user (e.g., content following a pay content) is available for the first user, automatically playing the corresponding content.

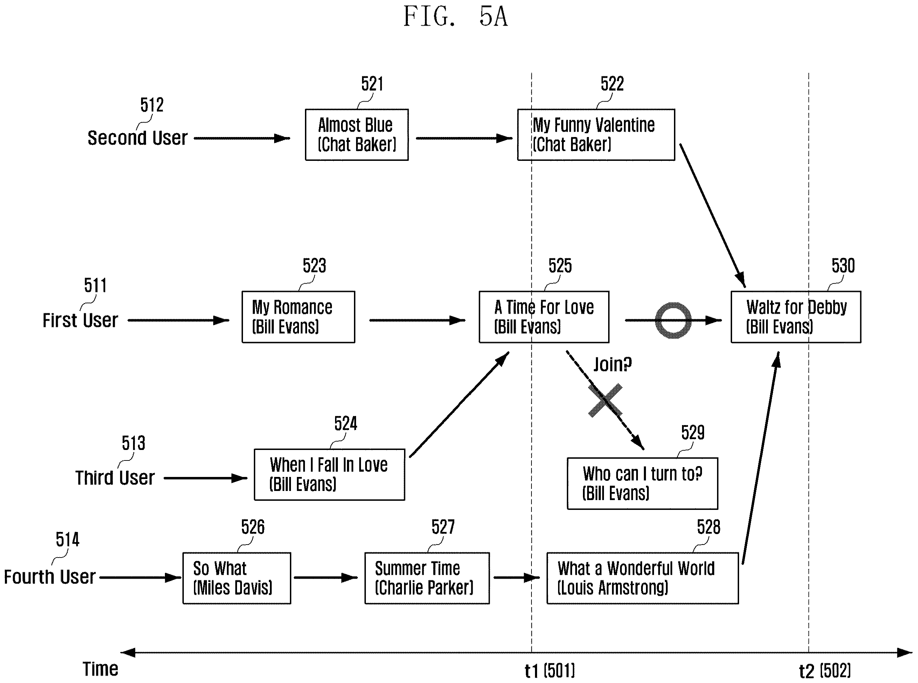

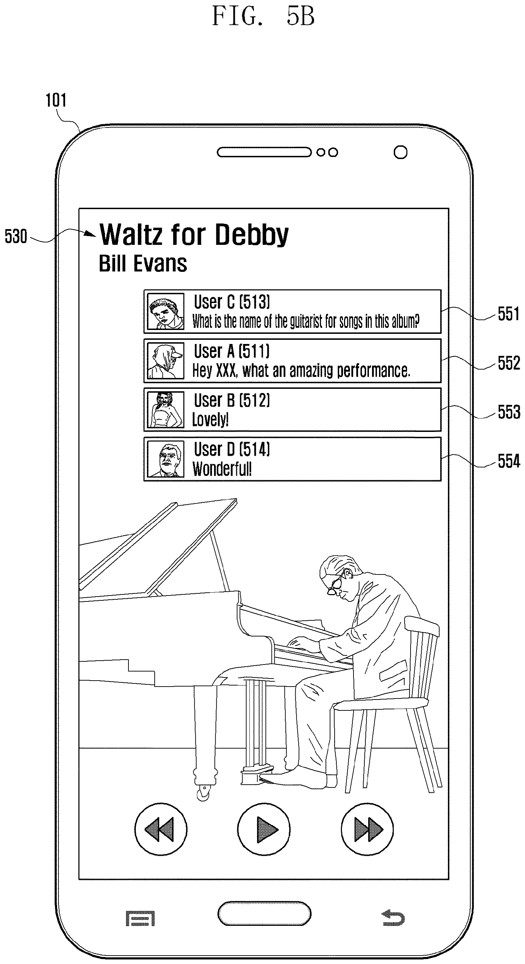

FIGS. 5A and 5B are diagrams for explaining a content-based inter-user conversation method in a streaming service according to various embodiments of the present disclosure.

Referring to FIG. 5A, the contents being consumed by a first user 511, a second user 512, a third user 513, and a fourth user 514 are arranged in a temporal order. Each of users 511 through 514 may play content 521 through 530.

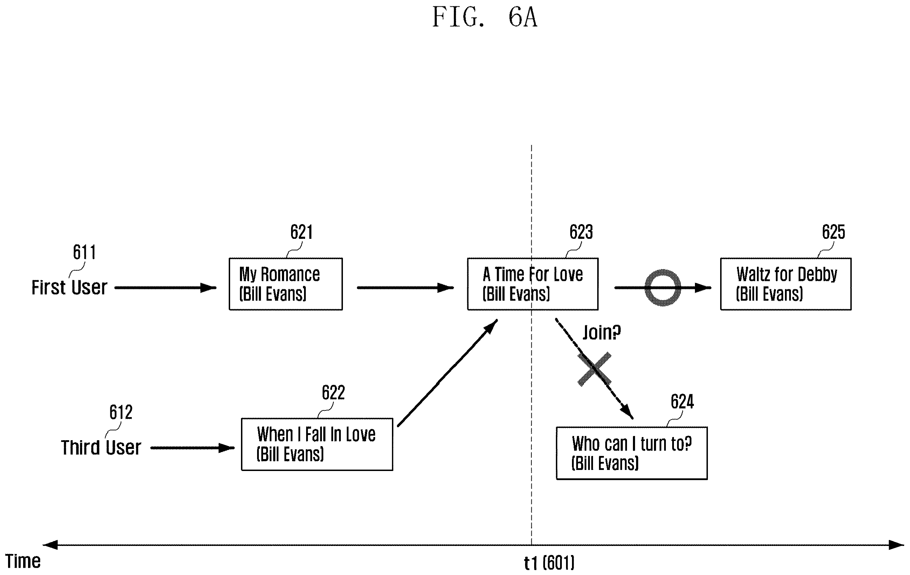

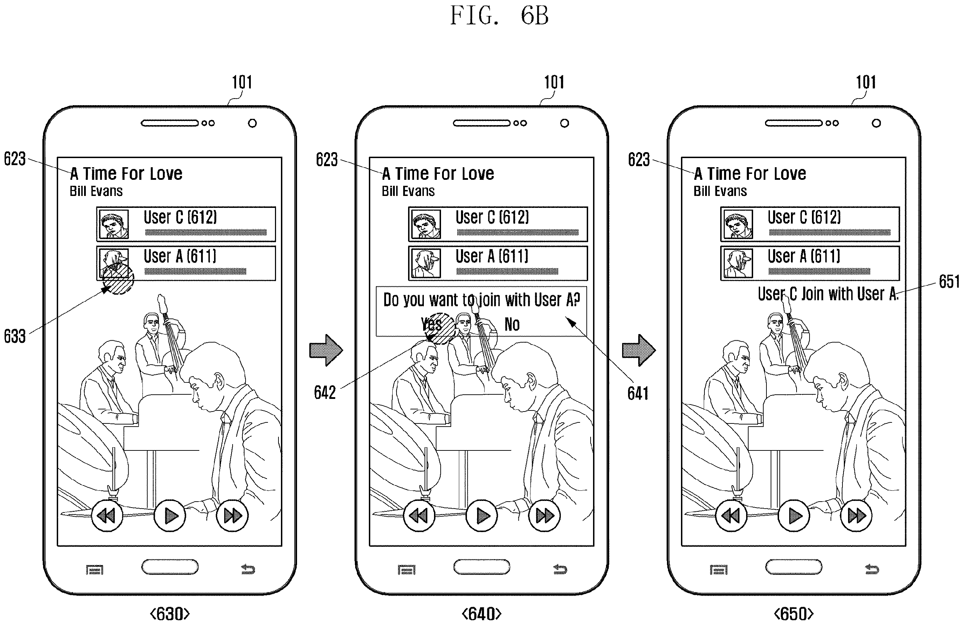

According to various embodiments, the first and third users 511 and 513 may start consuming a first content 525 (i.e., A Time for Love) at a first time point t1 501. In this case, the third user 513 may join the first user 511 as to be described with reference to FIGS. 6A and 6B.

According to various embodiments, the first to fourth users 511 to 514 may start consuming a second content 530 (i.e., Waltz for Debby) at a second time point t2 502. In this case, the electronic device 101 may provide a user interface which makes it possible for the first to fourth users 511 to 514 to join in conversation. Of course, it may be possible for any of the users to be excluded from the conversation based on per-user filtering conditions.

Referring to FIG. 5B, the electronic device 101 may provide a user interface that makes it possible for the first to fourth users 511 to 514 who start consuming the second content 530 (i.e., Waltz for Debby) at the second time point t2 502 to join in conversation. It may be assumed that the user of the electronic device 101 is the third user 513.

According to various embodiments, the third user 513 of the electronic device 101 may input a message as denoted by reference number 551. For example, the third user 513 of the electronic device 101 may input a message "What is the name of the guitarist for songs in this album?" The electronic device 101 may send this message to the electronic devices of the other users 511, 512, and 514. For example, the third user 513 of the electronic device 101 may check the messages input by the other users 511, 512, and 514 as denoted by reference numbers 552, 553, and 554, for example, the message "Hey XXX, what an amazing performance." input by the first user 511 as denoted by reference number 552. In this way, the user 513 of the electronic device 101 may acquire the information on the guitarist for the corresponding content and experience content-based real-time communication, which cannot be expected in the legacy streaming service.

FIGS. 6A and 6B are diagrams for explaining a method for determining a content to be played next through a content-based conversation in a streaming service according to various embodiments of the present disclosure.

Referring to FIG. 6A, contents 621 to 625 being consumed by a first user 611 and a third user 612 may be arranged in a temporal order.

According to various embodiments, the first and third users 611 and 612 may start consuming the first content 623 (i.e., A Time for Love). In this case, the third user 612 may make a determination to join the first user 611.

According to various embodiments, if the third user 612 joins the first user 611, the electronic device 101 may determine to play the second content next based on a playlist of the first user 611. For example, the electronic device 101 may determine the second content 625 (i.e., Waltz for Debby) as the next content to be played. The electronic device 101 may provide a user interface that makes it possible for the first and third users 611 and 613 to converse while consuming the same content.

According to various embodiments, if the third user 612 rejects joining the first user 611, the electronic device 101 may determine the next content to play based on the playlist of the third user 612. For example, the electronic device 101 may determine the second content 624(i.e., Who can I turn to?) as the next content to play.

Referring to FIG. 6B, the electronic device 101 may provide a user interface that makes it possible for the first and second users 611 and 612 who start consuming the first content 623 (i.e., A Time for Love) at time point t1 601 to join in conversation. It may be assumed that the user of the electronic device 101 is the third user 612.

According to various embodiments, the electronic device 101 may receive a user input 633 for selecting the profile of the first user 611, the user input being made by the third user 612 as shown in part 630 of FIG. 6B. For example, the user input may be produced by a gesture (such as a tap, a click, and a double tap) made with a finger or a touch pen.

According to various embodiments, the electronic device 101 may present to the third user 612 an option item for joining the first user 611 (e.g., yes/no) 641 as shown in part 640 of FIG. 6B. The electronic device 101 may receive a user input 642 for selecting the option indicating "yes," the user input being made by the third user 612. For example, the user input may be produced by any of the aforementioned gestures (i.e., tap, click, and double tap) made with a finger or a touch pen.

According to various embodiments, the electronic device 101 may display a message 651 providing notification that the third user 612 has joined the first user 611 as shown in part 650 of FIG. 6B. In this way, the user 612 of the electronic device 101 may share a playlist with the first user 611 and communicate with the first user 611 during the playback of the second content 625 as well as the first content 623.

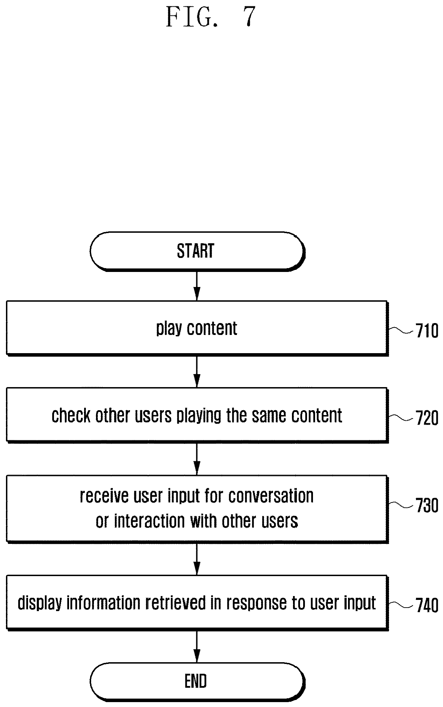

FIG. 7 is a flowchart illustrating a content-based inter-user conversation/interaction method on a streaming service according to various embodiments of the present disclosure.

Referring to FIG. 7, according to various embodiments, the electronic device 101 may play contents randomly at operation 710. The contents may be individual items (e.g., songs and videos) that can be categorized by station (or channel), genre (e.g., pop-song, K-POP, jazz, and rock), artist, or the like.

According to various embodiments, the electronic device 101 may check for other users playing the same contents at operation 720.

According to various embodiments, the electronic device 101 may receive a user input requesting for communication with other users at operation 730 and display the information retrieved in response to the user input at operation 740.

According to various embodiments, the electronic device 101 may provide a user interface that makes it possible for a user to communicate (e.g., texts, images, and links) with other users consuming the same content on the streaming service during the operation of operations 730 and 740. In this case, the electronic device 101 may use the content as a real-time communication channel such that the users can communicate during the playback of the corresponding content. The electronic device 101 may also provide a user interface that makes it possible for the user to check for the profiles of other users.

According to various embodiments, the electronic device 101 may control such that a user can check the profiles of other users consuming the same content at the same time point on the streaming service during the operation of operations 730 and 740.

According to various embodiments, the electronic device 101 may provide a user interface that makes it possible for the users consuming the same content on a streaming service to join in conversation during the operation of operations 730 and 740. In the case where the first and second users are consuming the first content at the same time point on the streaming service, the electronic device may receive a user input made by the first user for joining the second user. Afterward, the electronic device 101 may determine a playlist of the first user and control such that the joined first and second users can continue communication.

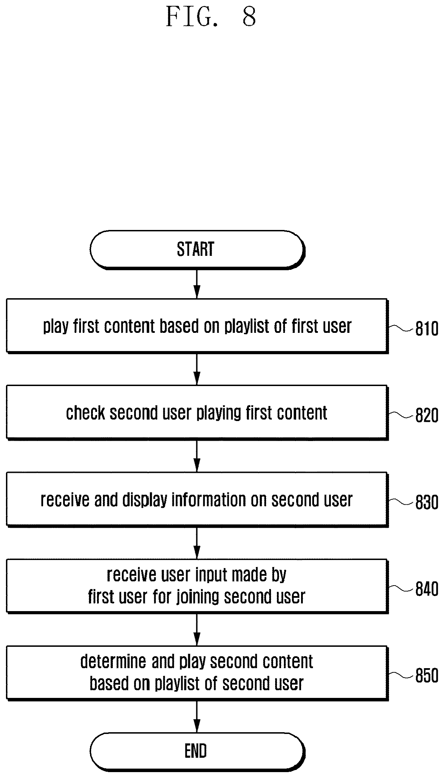

FIG. 8 is a flowchart illustrating a method for determining a next content to be played on a streaming service with a user join function according to various embodiments of the present disclosure.

Referring to FIG. 8, according to various embodiments, the electronic device 101 may play a first content based on the playlist of a first user at operation 810. The content may be individual items (e.g., songs and videos) that can be categorized by station (or channel), genre (e.g., pop-song, K-POP, jazz, and rock), artist, or the like.

According to various embodiments, the electronic device 101 may check for a second user consuming the first content, at operation 820.

According to various embodiments, the electronic device 101 may receive and display information on the second user at operation 830. For example, the electronic device 101 may receive and display a message or a profile on the second user that is transmitted by the second user.

According to various embodiments, the electronic device 101 may receive a user input request for the first user joining the second user at operation 840, the user input request being made by the first user. For example, the electronic device 101 may provide a user interface that makes it possible for a user to join in conversation with other users consuming the same content on the streaming service.

According to various embodiments, the electronic device 101 may determine a second content to play next based on the playlist of the second user and play the second content at operation 850. For example, if the first user joins the second user, the electronic device 101 may share the playlist of the second user or substitute the playlist of the second user for the playlist of the first user. If the second content is played on the electronic device of the second user (e.g. if the playback of the first content is completed or skipped), the electronic device 101 may start playing the second content immediately. In this way, the first user may continue communication with the second user about the second content.

According to various embodiments, an electronic device may include a communication interface, a display, and a processor electrically coupled to the communication interface and the display, and configured to control playing a first content on a streaming service, identify at least one external electronic device playing the first content on the streaming service, and provides a user interface for communication with a user of the at least one external electronic device.

The processor may provide, via the user interface, a conversation function allowing for a user of the electronic device to communicate with the user of the at least one external electronic device.

The conversation function may include filtering the user of the at least one external electronic device based on at least one predetermined condition.

The at least one predetermined condition may include gender, age, nationality, race, hobby, and religion.

The processor may provide the user interface to identify a profile of the user of the at least one external electronic device.

The processor may provide, via the user interface, at least one of information of a playing channel of the first content, a similarity between contents being consumed by a user of the electronic device and the user of the at least one external electronic device, and a number of encounters of the user of the electronic device with the user of the at least one external electronic device in consuming the same contents.

The processor may control receiving, via the user interface, a request a user of the electronic device for joining the userof the at least one external electronic device.

The processor may control, in response to the request, substituting a playlist of the user of the at least one external electronic device for a playlist of the user of the electronic device on the streaming service.

The processor may control after the joining, receiving a content change event of the user of the at least one external electronic device for playing a second content instead of the first content, and playing, in response to receiving the content change event, the second content on the streaming service.

The processor may detect that the content change event occurs when one of the other users plays the second content after joining the other users, determine whether the second content is a pay content, and control, when the second content is a pay content, displaying a screen for payment for the second content.

According to various embodiments, a method of a streaming service on an electronic device may include playing a first content on the streaming service, identifying at least one external electronic device playing the first content on the streaming service, and providing a user interface for communication with the userof the at least one external electronic device.

The method may further include providing, via the user interface, a conversation function allowing for a user of the at least one external electronic deviceto communicate with the user of the at least one external electronic device.

The method may further include enabling the conversation function to comprises filtering the user of the at least one external electronic device based on at least one predetermined condition.

The at least one predetermined condition may include gender, age, nationality, race, hobby, and religion.

The method may further include provide the user interface to identify a profile of the user of the at least one external electronic device.

The method may further include providing, via the user interface, at least one of information of a playing channel of the first content, a similarity between contents being consumed by a user of the electronic device and the user of the at least one external electronic device, and a number of encounters of a user of the electronic device with the user of the at least one external electronic device in consuming the same contents.

The method may further include receiving, via the user interface, a request from a user of the electronic device to join the user of the at least one external electronic device.

The method may further include in response to the request, substituting a playlist of the user of the at least one external electronic device for a playlist of the user of the electronic device on the streaming service.

The method may further include after the joining, receiving a content change event of the user of the at least one external electronic device for playing a second content instead of the first content, and playing, in response to receiving the content change event, the second content on the streaming service.

The method may further include after the joining, receiving the content change event of the user of the at least one external electronic device for playing the second content instead of the first content, determining whether the second content needs to be paid; and displaying, if the second content needs to be paid, a screen for payment for the second content.

As described above, the streaming service method and device of the present disclosure is advantageous in terms of facilitating conversation and interaction among users consuming the same contents on a streaming service.

Also, the streaming service method and device of the present disclosure is advantageous in terms of making it possible for the users consuming the same content to talk among each other.

Also, the streaming service method and device of the present disclosure is advantageous in terms of allowing any of the users consuming the same content to opt for the next content to be played.

Also, the streaming service method and device of the present disclosure is advantageous in terms of making it possible to give an interactive social experience to the users consuming the same content.

Also, the streaming service method and device of the present disclosure is advantageous in terms of improving user satisfaction by making it possible for the users consuming the same content on the streaming service to converse and interact among each other.

The term "module" used in the present disclosure may refer to a unit including one or more combinations of hardware, software, and firmware. The "module" may be interchangeable with a term, such as "unit," "logic," "logical block," "component," or "circuit". The "module" may be a minimum unit of a component formed as one body or a part thereof, may be a minimum unit for performing one or more functions or a part thereof, and may be implemented mechanically or electronically. For example, the "module" according to an embodiment of the present disclosure may include at least one of an application-specific integrated circuit (ASIC) chip, a field-programmable gate array (FPGA), and a programmable-logic device for performing certain operations which have been known or are to be developed in the future.

Examples of computer-readable media include magnetic media, such as hard disks, floppy disks, and magnetic tape; optical media such as compact disc ROM (CD-ROM) disks and DVD, magneto-optical media, such as floptical disks, and hardware devices that are specially configured to store and perform program instructions, such as ROM, RAM, and flash memory. Examples of program instructions include machine code instructions created by assembly languages, such as a compiler, and code instructions created by a high-level programming language executable in computers using an interpreter. The described hardware devices may be configured to act as one or more software modules in order to perform the operations and methods described above, or vice versa.

Modules or programming modules according to the various embodiments of the present disclosure may include one or more components, remove part of the components described above, or include new components. The operations performed by modules, programming modules, or the other components, according to the present disclosure, may be executed in serial, parallel, repetitive or heuristic fashion. Part of the operations can be executed in any other order, omitted, or executed with additional operations.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. An electronic device comprising:
a communication interface;
a display; and
a processor electrically coupled to the communication interface and the display, and configured to:
control playing a first content on a streaming service,
identify at least one external electronic device playing the first content on the streaming service, and
provide a user interface for communicating with a user of the at least one external electronic device.

2. The electronic device of claim 1, wherein the processor is further configured to:
provide, via the user interface, a conversation function allowing for a user of the electronic device to communicate with the user of the at least one external electronic device.

3. The electronic device of claim 2, wherein the conversation function comprises filtering the user of the at least one external electronic device based on at least one predetermined condition.

4. The electronic device of claim 3, wherein the at least one predetermined condition comprises gender, age, nationality, race, hobby, and religion.

5. The electronic device of claim 1, wherein the processor is further configured to provide the user interface to identify a profile of the user of the at least one external electronic device.

6. The electronic device of claim 5, wherein the processor is further configured to provide, via the user interface, at least one information of a playing channel of the first content, a similarity between contents consumed by a user of the electronic device and the user of the at least one external electronic device, and a number of encounters of the user of the electronic device with the user of the at least one external electronic device in consuming the same contents.

7. The electronic device of claim 1, wherein the processor is further configured to receive, via the user interface, a request from a user of the electronic device to join the user of the at least one external electronic device.

8. The electronic device of claim 7, wherein the processor is further configured to, in response to the request, substitute a playlist of the user of the at least one external electronic device for a playlist of the user of the electronic device on the streaming service.

9. The electronic device of claim 8, wherein the processor is further configured to:
after the joining, receive a content change event of the user of the at least one external electronic device for playing a second content instead of the first content, and
play, in response to receiving the content change event, the second content on the streaming service.

10. The electronic device of claim 9, wherein the processor is further configured to:
after the joining, receive the content change event of the user of the at least one external electronic device for playing the second content instead of the first content,
determine whether the second content needs to be paid, and
display, if the second content needs to be paid, a screen for payment for the second content.

11. A method of a streaming service on an electronic device, the method comprising:
playing a first content on the streaming service;
identifying at least one external electronic device playing the first content on the streaming service; and
providing a user interface for communication with a user of the at least one external electronic device.

12. The method of claim 11, further comprising providing, via the user interface, a conversation function allowing for a user of the electronic device to communicate with the user of the at least one external electronic device,
wherein the conversation function comprises filtering the user of the at least one external electronic device based on at least one predetermined condition.

13. The method of claim 11, further comprising providing, via the user interface, at least one of information of a playing channel of the first content, a similarity between contents consumed by a user of the electronic device and the user of the at least one external electronic device, and a number of encounters of a user of the electronic device with the user of the at least one external electronic device in consuming the same contents.

14. The method of claim 11, further comprising:
receiving, via the user interface, a request from a user of the electronic device to join the user of the at least one external electronic device;
in response to the request, substituting a playlist of the user of the at least one external electronic device for a playlist of the user of the electronic device on the streaming service.

15. The method of claim 11, wherein one of the user or the other user sets a next song to be played.
